(19)

Europäisches Patentamt
European Patent Office
Office européen des brevets

(11)  **EP 4 775 421 A1**

(12)  **EUROPEAN PATENT APPLICATION**
published in accordance with Art. 153(4) EPC

(43) Date of publication:
**15.07.2026  Bulletin 2026/29**

(51) International Patent Classification (IPC):
**B60J 1/00** (2006.01)        **B60J 3/04** (2006.01)
**C03C 27/12** (2006.01)

(21) Application number: 24862710.1

(22) Date of filing: 30.08.2024

(52) Cooperative Patent Classification (CPC):
**B32B 17/00; B60J 1/00; B60J 3/04**

(86) International application number:
**PCT/JP2024/031113**

(87) International publication number:
**WO 2025/053058 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  07.09.2023  JP 2023145499

(71) Applicant: Nippon Sheet Glass Company, Limited
Tokyo 108-6321 (JP)

(72) Inventors:
• **MIYABE, Daisuke**
  **Tokyo 108-6321 (JP)**
• **ENOEDA, Ryunosuke**
  **Tokyo 108-6321 (JP)**
• **FUJIWARA, Takeshi**
  **Tokyo 108-6321 (JP)**
• **ASAOKA, Hisashi**
  **Tokyo 108-6321 (JP)**

(74) Representative: **Stanley, Andrew Thomas et al**
**Pilkington Group Limited**
**Intellectual Property**
**Pilkington European Technical Centre**
**Hall Lane, Lathom**
**Ormskirk, Lancashire L40 5UF (GB)**

(54)  **LAMINATED GLASS FOR VEHICLE ROOF**

(57)    A vehicle roof laminated glass (10) is for use in at least a part of a roof (2) of a vehicle, and includes: a dimming layer (14) capable of adjusting light transmittance in response to application of a voltage; an insulating intermediate layer (13) disposed to hold the dimming layer (14); and an outer glass sheet (12) and an inner glass sheet (11) that are a pair of glass sheets (11), (12) disposed to hold the intermediate layer (13), wherein the vehicle roof laminated glass (10) has a hue-matching layer M disposed on a vehicle interior side of the dimming layer (14) and configured to match hue with another glass sheet (4a) provided in a face section of the vehicle continuous with the roof (2).

Fig.2

## Description

Technical Field

The present invention relates to vehicle roof laminated glass.

Background Art

Dimming laminated glass, in which a dimming section capable of changing transmittance with electricity is encapsulated in an intermediate layer, is known for use in windows of automobiles and railway vehicles. The dimming section is constituted by a dimming layer and a pair of conductive layers sandwiching the dimming layer. To improve the privacy of occupants, for example, this type of dimming laminated glass scatters light and becomes frosted when the dimming layer is off, and becomes transparent when the dimming section is on. As the dimming layer, for example, a liquid crystal element is used (e.g., see Patent Document 1).

Prior Art Documents

Patent Documents

Patent Document 1: WO 2022/153998

Disclosure of the Invention

Problem to be Solved by the Invention

Dimming laminated glass may be used, for example, in a roof of a vehicle. Also, in vehicles, privacy glass having a gray coloration may be used, for example, for a rear glass or side glass adjacent to the roof. The privacy of occupants in a rear seat can be protected from the outside by using privacy glass for the rear glass or the like. In this case, a front glass is required by law to have a visible light transmittance of 70% or more. Thus, the visible light transmittance differs significantly between a front side of the vehicle and a rear side of the vehicle, and the vehicle interior space therefore tends to exhibit disharmony in hue. In this case, it is conceivable to utilize the dimming function of the dimming laminated glass adopted for the roof, for example, to impart a sense of uniformity to the hue in the vehicle interior space. However, even when the hue of the dimming layer of the roof glass is matched to the hue of the rear glass, a difference in hue is observed therebetween. As a result, it is difficult to ensure a sense of uniformity in hue in the vehicle interior space.

In view of this, there is a demand for a vehicle roof laminated glass capable of achieving hue matching with other glasses disposed adjacent to the roof.

Means for Solving Problem

A characteristic configuration of a vehicle roof laminated glass according to the present invention lies in a vehicle roof laminated glass for use in at least a part of a roof of a vehicle, including: a dimming layer capable of adjusting light transmittance in response to application of a voltage; an insulating intermediate layer disposed to hold the dimming layer; and an outer glass sheet and an inner glass sheet that are a pair of glass sheets disposed to hold the intermediate layer, wherein the vehicle roof laminated glass has a hue-matching layer disposed on a vehicle interior side of the dimming layer and configured to match hue with another glass sheet provided in a face section of the vehicle continuous with the roof.

According to this configuration, the vehicle roof laminated glass includes a hue-matching layer that is disposed on the vehicle interior side of the dimming layer and is configured to match hue with the other glass sheet provided in a face section of the vehicle continuous with the roof. Therefore, even when the other glass sheet provided in the face section of the vehicle continuous with the roof is a colored glass sheet, the hue-matching layer can match hue between the vehicle roof laminated glass and the other glass sheet. As a result, a sense of uniformity in hue in the vehicle interior space can be ensured easily and appropriately.

Another characteristic configuration lies in that the hue-matching layer is constituted by the inner glass sheet.

A dimming laminated glass used in a vehicle includes: a dimming layer capable of adjusting light transmittance upon application of voltage; an intermediate layer that is insulating and disposed to sandwich the dimming layer; and an outer glass sheet and an inner glass sheet that are a pair of glass sheets sandwiching the intermediate layer. Accordingly, if the hue-matching layer is constituted by the inner glass sheet as in this configuration, the vehicle roof laminated glass can be configured without adding a new member as the hue-matching layer, and the costs, processes, and the like during production can be reduced. Further, the inner glass sheet as the hue-matching layer is the same glass sheet as the other glass sheet provided in the face section of the vehicle continuous with the roof. This makes it easy to match the hue with the other glass sheet, and to ensure a sense of uniformity in hue in the vehicle interior space.

Another characteristic configuration lies in that the vehicle roof laminated glass further includes an optical adjustment layer configured to adjust optical performance.

A vehicle roof laminated glass having a dimming layer includes a pair of glass sheets. Thus, the pair of glass sheets makes the vehicle interior space susceptible to the effects of external light, reflections of the interior space, or the like. To address this, in this configuration, the vehicle roof laminated glass further includes an optical adjustment layer configured to adjust optical performance. This enables the vehicle roof laminated glass to appropriately adjust the effects imparted by the pair of glass sheets on the vehicle interior space, by using the optical adjustment layer.

Another characteristic configuration lies in that the optical adjustment layer is capable of adjusting at least one of: visible light transmittance; luminance; and luminous intensity.

If the optical adjustment layer is capable of adjusting at least one of visible light transmittance, luminance, and luminous intensity, as in this configuration, the vehicle roof laminated glass can appropriately adjust the effects of external light passing through the pair of glass sheets on the vehicle interior space, by utilizing the optical adjustment layer.

Another characteristic configuration lies in that the optical adjustment layer is disposed on a vehicle exterior side of the hue-matching layer.

If the optical adjustment layer is disposed on the vehicle exterior side of the hue-matching layer as in this configuration, the optical adjustment layer can function prior to the hue-matching layer with respect to external light, and the hue-matching layer can more effectively exhibit its function with respect to the vehicle interior space than the optical adjustment layer. Therefore, the vehicle roof laminated glass can easily achieve a sense of uniformity in hue in the vehicle interior space with use of the hue-matching layer and the optical adjustment layer.

Another characteristic configuration lies in that the intermediate layer includes: a support substrate disposed on each of two sides of the dimming layer to support the dimming layer; and an adhesive layer disposed between the support substrate and a corresponding one of the pair of glass sheets to bond the support substrate to the corresponding one of the pair of glass sheets, and the optical adjustment layer is constituted by at least one of the dimming layer, the support substrate, the adhesive layer, and the outer glass sheet.

If the optical adjustment layer is constituted by an existing member in the vehicle roof laminated glass as in this configuration, the vehicle roof laminated glass can be configured without adding a new member as the optical adjustment layer, and the costs, processes, and the like during production can be reduced.

Another characteristic configuration lies in that the optical adjustment layer includes at least one of a Low-E film and an anti-reflection layer.

If the optical adjustment layer includes at least one of a Low-E film and an anti-reflection layer as in this configuration, the vehicle roof laminated glass can improve heat-shielding or heat-insulating effect with the Low-E film, and can easily avoid reflections of the vehicle interior space with the anti-reflection layer.

Another characteristic configuration lies in that the pair of glass sheets each have an area of 800 mm × 600 mm or more.

If each of the pair of glass sheets has an area of 800 mm × 600 mm or more as in this configuration, a large area of the vehicle roof laminated glass can be secured with respect to the roof of the vehicle, thereby more easily achieving a sense of uniformity in hue in the vehicle interior space.

Another characteristic configuration lies in that hue-matching has a difference in hue from the other glass sheet within 5 for a* and within 5 for b* in a chromaticity represented in CIE L*a*b* chromaticity coordinates.

If, in the chromaticity represented in the CIE L*a*b* chromaticity coordinates, the difference in hue between the hue-matching layer and the other glass sheet provided in the face section of the vehicle continuous with the roof is within 5 for a* and within 5 for b*, it is possible to appropriately achieve a sense of uniformity in the vehicle interior space constituted by the vehicle roof laminated glass and the other glass sheet.

Another characteristic configuration lies in that the hue-matching layer has an a* value of -10.0 or more and 6.5 or less and a b* value of -3.5 or more and 6.5 or less in the chromaticity represented in the CIE L*a*b* chromaticity coordinates.

For example, a vehicle may have a privacy glass disposed in a rear section, which is a face section continuous with the roof and extending rearward of the vehicle. Privacy glass has, for example, a visible light transmittance of 70% or less and exhibits excellent light-shielding properties, while also enabling hue adjustment. Such privacy glass often exhibits an a* value of -5 or more and less than 0 and a b* value of 0 or more and less than 5 in the chromaticity represented in the CIE L*a*b* chromaticity coordinates. Therefore, with the chromaticity in this configuration, the vehicle roof laminated glass can achieve a sense of uniformity with the privacy glass.

Another characteristic configuration lies in that the hue-matching layer is constituted by the pair of glass sheets, and the hue-matching layer has a difference in hue from the other glass sheet within 5 for a* and within 5 for b* in a chromaticity represented in CIE L*a*b* chromaticity coordinates while the dimming layer is in a transmitting state in which the dimming layer transmits visible light.

If, as in this configuration, the hue-matching layer is constituted by the pair of glass sheets, and has a difference in hue from the other glass sheet provided in the face section of the vehicle continuous with the roof within 5 for a* and within 5 for b* in the chromaticity represented in the CIE L*a*b* chromaticity coordinates while the dimming layer is in a transmitting state in which it transmits visible light, it is possible to appropriately achieve a sense of uniformity in the vehicle interior space constituted by the vehicle roof laminated glass and the other glass sheet.

Another characteristic configuration lies in that the hue-matching layer has an a* value of -10.0 or more and 6.5 or less, and a b* value of -3.5 or more and 6.5 or less in the chromaticity represented in the CIE L*a*b* chromaticity coordinates.

As mentioned above, privacy glass often exhibits an a* value of -5 or more and less than 0 and a b* value of 0 or more and less than 5 in the chromaticity represented in the CIE L*a*b* chromaticity coordinates. Therefore, with the chromaticity in this configuration, the vehicle roof laminated glass can achieve a sense of uniformity with the privacy glass.

Another characteristic configuration lies in that the hue-matching layer is made of soda-lime glass in which a total amount of $Fe_2O_3$ is 1.2 wt% or less, the soda-lime glass containing 0.5 wt% or less of $TiO_2$.

In the case where the hue-matching layer is made of soda-lime glass and contains a large amount of $Fe_2O_3$ or $TiO_2$, a* increases toward the negative side, resulting in a more greenish appearance, and b* increases toward the positive side, resulting in a more yellowish appearance in the chromaticity represented in the CIE L*a*b* chromaticity coordinates. In contrast, if, as in this configuration, the hue-matching layer is made of soda-lime glass in which the total amount of $Fe_2O_3$ is 1.2 wt% or less and the amount of $TiO_2$ is 0.5 wt% or less, a* and b* become smaller and the hue of the hue-matching layer is suppressed. This enables the vehicle laminated glass to effectively achieve a sense of uniformity with the privacy glass in the vehicle space with use of the hue-matching layer. Note that the total amount of $Fe_2O_3$ refers to the total amount of iron oxide in the case where it is assumed that all FeO and $Fe_2O_3$ exist as $Fe_2O_3$, considering that both FeO and $Fe_2O_3$ exist as iron oxide in soda-lime glass.

Another characteristic configuration lies in that the hue-matching layer is made of soda-lime glass further containing 100 ppm or less of $Co_3O_4$ and 5 ppm or less of Se.

In the case where the hue-matching layer is made of soda-lime glass and contains a large amount of $Co_3O_4$, b* increases toward the negative side, resulting in a more greenish appearance in the chromaticity represented in the CIE L*a*b* chromaticity coordinates. Further, in the case where the hue-matching layer is made of soda glass and contains a large amount of Se, a* increases toward the positive side, resulting in a more reddish appearance, and b* increases toward the positive side, resulting in a more yellowish appearance in the chromaticity represented in the CIE L*a*b* chromaticity coordinates. In contrast, if the hue-matching layer contains 100 ppm or less of $Co_3O_4$ and 5 ppm or less of Se as in this configuration, changes in hue of the hue-matching layer caused by a* and b* are suppressed. This enables the vehicle laminated glass to effectively achieve a sense of uniformity with the privacy glass in the vehicle space with use of the hue-matching layer.

Another characteristic configuration lies in that the hue-matching layer is made of soda-lime glass in which a combined amount of a total amount of $Fe_2O_3$ and an amount of $TiO_2$ is 1.0 wt% or more and 4.0 wt% or less, the soda-lime glass containing 500 ppm or less of $Co_3O_4$ and 15 ppm or more and 40 ppm or less of Se.

In the case where the hue-matching layer is made of soda-lime glass and contains a large amount of $Fe_2O_3$ or $TiO_2$, a* increases toward the negative side, resulting in a more greenish appearance, and b* increases toward the positive side, resulting in a more yellowish appearance in the chromaticity represented in the CIE L*a*b* chromaticity coordinates. Also, in the case where the hue-matching layer is made of soda glass and contains a large amount of $Co_3O_4$, b* increases toward the negative side, resulting in a more greenish appearance in the chromaticity represented in the CIE L*a*b* chromaticity coordinates. Further, in the case where the hue-matching layer is made of soda glass and contains a large amount of Se, a* increases toward the positive side, resulting in a more reddish appearance, and b* increases toward the positive side, resulting in a more yellowish appearance in the chromaticity represented in the CIE L*a*b* chromaticity coordinates.

Therefore, even in the case where the combined amount of the total amount of $Fe_2O_3$ and the amount of $TiO_2$ in the hue-matching layer is 1.0 wt% or more and 4.0 wt% or less as in this configuration, if the hue-matching layer is made of soda-lime glass containing 500 ppm or less of $Co_3O_4$ and 15 ppm or more and 40 ppm or less of Se, the tendency of a* to increase in the negative direction due to the combined amount of the total amount of $Fe_2O_3$ and the amount of $TiO_2$ is offset toward the positive direction by the presence of Se. In addition, in the hue-matching layer, the tendency of b* to increase in the positive direction due to the combined amount of the total amount of $Fe_2O_3$ and the amount of $TiO_2$ is offset toward the negative direction by the presence of $Co_3O_4$. That is to say, since a* and b* do not take an excessively large value in either the positive or negative direction, the vehicle laminated glass can effectively achieve a sense of uniformity with the privacy glass in the vehicle space with use of the hue-matching layer.

Another characteristic configuration lies in that the hue-matching layer is made of soda-lime glass satisfying $-9 \leq Fa \leq 1$ and $-5 \leq Fb \leq 10$, where Fa is a coloring component function correlated with a* and Fb is a coloring component function correlated with b* in a chromaticity represented in CIE L*a*b* chromaticity coordinates, and the coloring component function Fa and the coloring component function Fb are defined, based on a total amount of $Fe_2O_3$, an amount of $TiO_2$, an amount of $Co_3O_4$, and an amount of Se that are contained in the hue-matching layer, as:

Fa = -3.5 × [total amount of $Fe_2O_3$ (wt%)] - 1.5 × [$TiO_2$ (wt%)] + 0.20 × [Se (ppm)]; and Fb = [total amount of $Fe_2O_3$ (wt%)] + 4 × [$TiO_2$ (wt%)] - 43 × $10^{-4}$ × [$Co_3O_4$ (ppm)] + 0.4 × $10^{-4}$ × [Se(ppm)].

In the chromaticity represented in the CIE L*a*b* chromaticity coordinates, an increase in a* of the chromaticity toward the positive side results in more reddish appearance, and an increase toward the negative side results in more greenish appearance. An increase in b* of the chromaticity toward the positive side results in more yellowish appearance, and an increase toward the negative side results in more bluish appearance. In the case where the hue-matching layer is made of soda glass and contains a large amount of $Fe_2O_3$ or $TiO_2$, a* increases toward the negative side, resulting in a more greenish appearance, and b* increases toward the positive side, resulting in more yellowish appearance. Therefore, the coloring component functions Fa and Fb, which correlate with a* and b*, respectively, in the chromaticity represented in the CIE L*a*b* chromaticity coordinates are proportional to a* and b* by defining the coefficients of the respective components as described above. Accordingly, if the hue-matching layer is made of soda glass, and Fa and Fb fall within the above-mentioned ranges as in this configuration, a* and b* can be kept within predetermined ranges in the chromaticity represented in the CIE L*a*b* chromaticity coordinates. This enables the vehicle laminated glass to effectively achieve a sense of uniformity with the privacy glass in the vehicle space with use of the hue-matching layer.

Brief Description of the Drawings

FIG. 1 is a diagram showing a vehicle roof laminated glass disposed in a roof of a vehicle.
FIG. 2 is a partial cross-sectional view of the vehicle roof laminated glass.
FIG. 3 is a partial cross-sectional view of a vehicle roof laminated glass according to a second embodiment.
FIG. 4 is a partial cross-sectional view of a first modification of the second embodiment.
FIG. 5 is a partial cross-sectional view of a second modification of the second embodiment.
FIG. 6 is a diagram illustrating chromaticities represented in the CIE L*a*b* chromaticity coordinates for single-pane glasses in an example.
FIG. 7 is a diagram illustrating chromaticities represented in the CIE L*a*b* chromaticity coordinates for laminated glasses in the example.

Best Mode for Carrying out the Invention

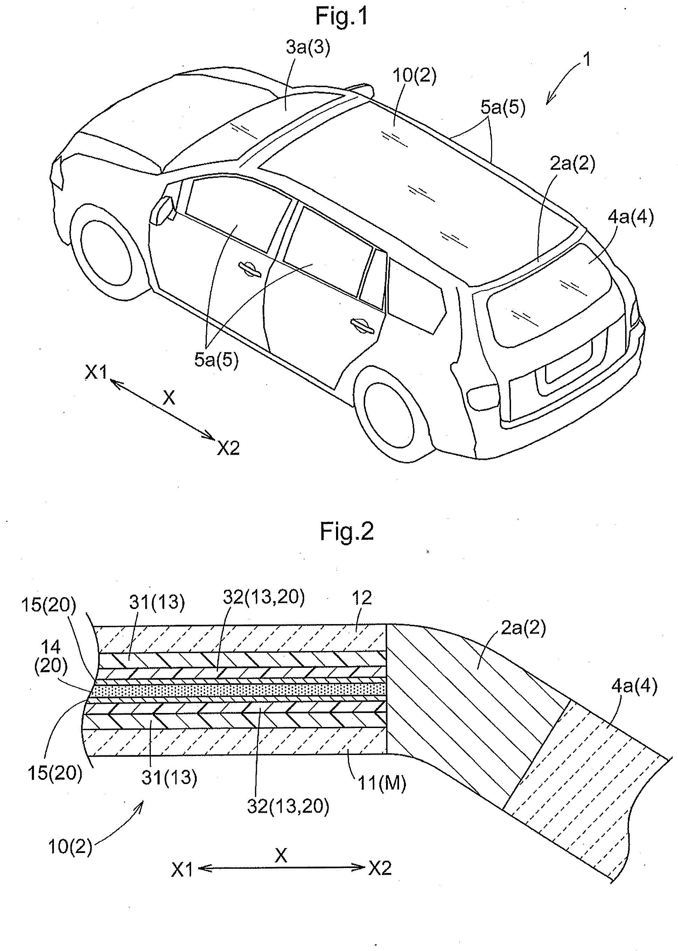

Embodiments of a vehicle roof laminated glass according to the present invention will be described below with reference to the drawings. Note that the invention is not limited to the following embodiments, and various modifications may be made without departing from the spirit of the invention.
As shown in FIG. 1, a vehicle roof laminated glass 10 (hereinafter referred to as "laminated glass 10") is disposed in a portion of a roof 2 of a vehicle 1. The vehicle 1 includes, as face sections continuous with the roof 2, a front face 3, a back face 4, and left and right side faces 5. The front face 3 includes a front glass 3a, the back face 4 includes a rear glass 4a, and the side faces 5 include a plurality of side glasses 5a. In the following figures, as shown in FIG. 1, the X-direction refers to the traveling direction of the vehicle (vehicle front-rear direction), the X1 side refers to the front side in the traveling direction, and the X2 side refers to the rear side in the traveling direction, for example. A roof rear edge section 2a is present between an end on the X2 side of the laminated glass 10 and an end on the X1 side of the rear glass 4a.

[First Embodiment]

As shown in FIG. 2, the laminated glass 10 includes a pair of glass sheets 11 and 12, an intermediate layer 13, a dimming layer 14, and a pair of conductive layers 15. The intermediate layer 13 is constituted by, for example, first intermediate layers 31 (each of which is an example of an adhesive layer) bonded to the two respective glass sheets 11 and 12, and second intermediate layers 32 (each of which is an example of a support substrate) each of which is disposed between a corresponding one of the first intermediate layers 31 and the dimming layer 14. A dimming section 20 includes the dimming layer 14, the pair of conductive layers 15, and the second intermediate layers 32. The dimming section 20 includes an element capable of switching the light transmittance of the laminated glass 10.
The dimming section 20 can be switched between a low-transmittance state and a high-transmittance state, for example. The transmittance may be switchable in multiple steps or steplessly (continuously). The dimming section 20 may be disposed over substantially the entire laminated glass 10 or only in a part thereof as needed. The planar shape of the dimming section 20 may be, for example, a rectangle smaller than the planar shape of the laminated glass 10.

The dimming section 20 is surrounded by the first intermediate layer 31. In the dimming section 20, the second intermediate layers 32 support the pair of conductive layers 15. Each of the first intermediate layers 31 is a buffer film having a smaller Young's modulus than that of the second intermediate layer 32. The first intermediate layer 31 and the second intermediate layer 32 are both formed of resin, and the pair of glass sheets 11 and 12 is bonded to the dimming section 20 through the first intermediate layers 31.

The dimming layer 14 has, for example, a parallel light transmittance of less than 30% while no voltage is applied and a parallel light transmittance of 30% or more while a voltage is applied. More preferably, the dimming layer 14 has a parallel light transmittance of 20% or less while no voltage is applied and a parallel light transmittance of 40% or more while a voltage is applied.

The dimming layer 14 may have a haze of 10% or more while no voltage is applied and a haze of less than 10% while a voltage is applied. More preferably, the dimming layer 14 has a haze of 20% or more while no voltage is applied and a haze of 8% or less while a voltage is applied. The dimming layer 14 may be formed with a smaller surface area than the intermediate layers 13 (the first intermediate layers 31 and the second intermediate layers 32).

The dimming layer 14 formed from, for example, liquid crystal is configured as a dimming film including the pair of conductive layers 15 disposed on the respective sides of the dimming layer 14. The dimming layer 14 controls the haze ratio of the film based on whether a current flows, thereby producing a transparent state and an opaque state. That is to say, the dimming layer 14 can adjust the light transmittance in response to application of a voltage. The dimming layer 14 may be of any of various known types, such as a polymer dispersed liquid crystal (PDLC) type and suspended particle device (SPD) type that utilize liquid crystal, an electrochromic type, and a thermochromic type.

The pair of conductive layers 15 is disposed to hold the dimming layer 14 and applies a voltage to the dimming layer 14 in response to the supply of electric power. The intermediate layers 13 (the first intermediate layers 31 and the second intermediate layers 32) are disposed to hold the pair of conductive layers 15, and have insulating properties.

The dimming layer 14 is opaque while no voltage is applied, and is transparent due to dimming in response to application of a voltage through the pair of conductive layers 15. Note that the dimming layer 14 may alternatively be configured to be transparent while no voltage is applied and opaque while a voltage is applied.

The dimming layer 14 is configured such that, for example, a voltage of 30 V or more is applied to reduce the haze value to 10% or lower. With this configuration, the dimming layer 14 in the laminated glass 10 can favorably improve transparency, allowing the dimming function to be properly exhibited.

Preferably, the dimming layer 14 has a film thickness of 20 $\mu$m or more and 150 $\mu$m or less. If the film thickness of the dimming layer 14 is 20 $\mu$m or more and 150 $\mu$m or less, it is possible to reduce the weight of the dimming layer 14 of the laminated glass 10 while ensuring an appropriate dimming function of the dimming layer 14.

In the present embodiment, of the pair of glass sheets 11 and 12 of the laminated glass 10, a first glass sheet 11 (an example of an inner glass sheet) is disposed on the vehicle interior side, and a second glass sheet 12 (an example of an outer glass sheet) is disposed on the vehicle exterior side. The pair of glass sheets 11 and 12 is disposed to hold the intermediate layer 13. Specifically, the pair of glass sheets 11 and 12 face each other. The intermediate layers 13, the dimming layer 14, and the pair of conductive layers 15 are located between the pair of glass sheets 11 and 12. The pair of glass sheets 11 and 12 is fixed while holding the intermediate layers 13, the dimming layer 14, and other layers.

The first glass sheet 11 and the second glass sheet 12 may be formed with known glass sheets, and may be formed of common soda-lime glass. An example composition of soda-lime glass is shown below.

(Soda-lime glass)

$SiO_2$: 70-73 % by mass
$Al_2O_3$: 0.6-2.4 % by mass
CaO: 7-12 % by mass
MgO: 1.0-4.5 % by mass
$R_2O$: 13-15 % by mass (R is an alkali metal)
Total iron oxide converted to $Fe_2O_3$ (T-$Fe_2O_3$): 0.08-0.14 % by mass

The laminated glass 10 has a hue-matching layer M disposed on the vehicle interior side of the dimming layer 14. The hue-matching layer M of the laminated glass 10 matches hue with, for example, a rear glass 4a (an example of another glass sheet) provided in the back face 4 (rear section) continuous with the roof 2 of the vehicle 1 shown in FIG. 1. In the present embodiment, the hue-matching layer M is constituted by the first glass sheet 11 (inner glass sheet). The phrase "the rear glass 4a continuous with the roof 2" means that the glasses (the laminated glass 10 and the rear glass 4a) are formed so as to be recognized as an inseparable glass via the roof rear edge section 2a and that the laminated glass 10 and the rear glass 4a are visually recognized as being adjacent to each other as seen from the vehicle interior.

Each of the two glass sheets 11 and 12 has, for example, an area of 800 mm × 600 mm or more. If, in the laminated glass 10, each of the two glass sheets 11 and 12 has an area of 800 mm × 600 mm or more, a sufficiently large area of the laminated glass 10 can be ensured relative to the roof 2 of the vehicle 1. This makes it easier to achieve a sense of uniformity in hue in the vehicle interior space.

In the case where only the first glass sheet 11 is used as the hue-matching layer M, in the chromaticity represented in the CIE L*a*b* chromaticity coordinates conforming to JIS Z8781-4 (2013), the difference in hue between the hue-matching layer M and the rear glass 4a that is calculated based on observation from the vehicle interior side is within 5 for a* and within 5 for b*. This configuration also makes it possible to appropriately achieve a sense of uniformity in the vehicle interior space constituted by the laminated glass 10 and the rear glass 4a (another glass sheet). More preferably, the difference in hue between the hue-matching layer M and the rear glass 4a is within 3 for a* and within 3 for b* in the CIE L*a*b* chromaticity coordinates.

The hue-matching layer M may also be constituted by the pair of glass sheets 11 and 12. In this case, while the dimming layer 14 is in a transmitting state, in which it transmits visible light, in the chromaticity represented in the CIE L*a*b* chromaticity coordinates conforming to JIS Z8781-4 (2013), the difference in hue between the hue-matching layer M and the rear glass 4a that is calculated based on observation from the interior side is within 5 for a* and within 5 for b*. This configuration makes it possible to appropriately achieve a sense of uniformity in the vehicle interior space constituted by the laminated glass 10 and the rear glass 4a (another glass sheet). More preferably, the difference in hue between the hue-matching layer M (the pair of glass sheets 11 and 12) and the rear glass 4a is within 3 for a* and within 3 for b* in the CIE L*a*b* chromaticity coordinates.

Here, privacy glass, which is used for the rear glass 4a and the like and prevents occupants in rear seats from being easily visible from outside, typically has a visible light transmittance of 70% or less, for example, and is excellent in light-shielding properties, while also allowing adjustment of hue. Such privacy glass often exhibits an a* value of -5 or more and less than 0 and a b* value of 0 or more and less than 5 in the chromaticity represented in the CIE L*a*b* chromaticity coordinates. Therefore, in the case where privacy glass is used for the rear glass 4a, whether the hue-matching layer M is constituted only by the first glass sheet 11 or by the pair of glass sheets 11 and 12, it is preferable that, in the chromaticity represented in the CIE L*a*b* chromaticity coordinates, the hue-matching layer M has an a* value of -10.0 or more and 6.5 or less, and a b* value of -3.5 or more and 6.5 or less. By setting the chromaticity of the hue-matching layer M within the above chromaticity range, the laminated glass 10 can achieve a sense of uniformity with the privacy glass.

[Second Embodiment]

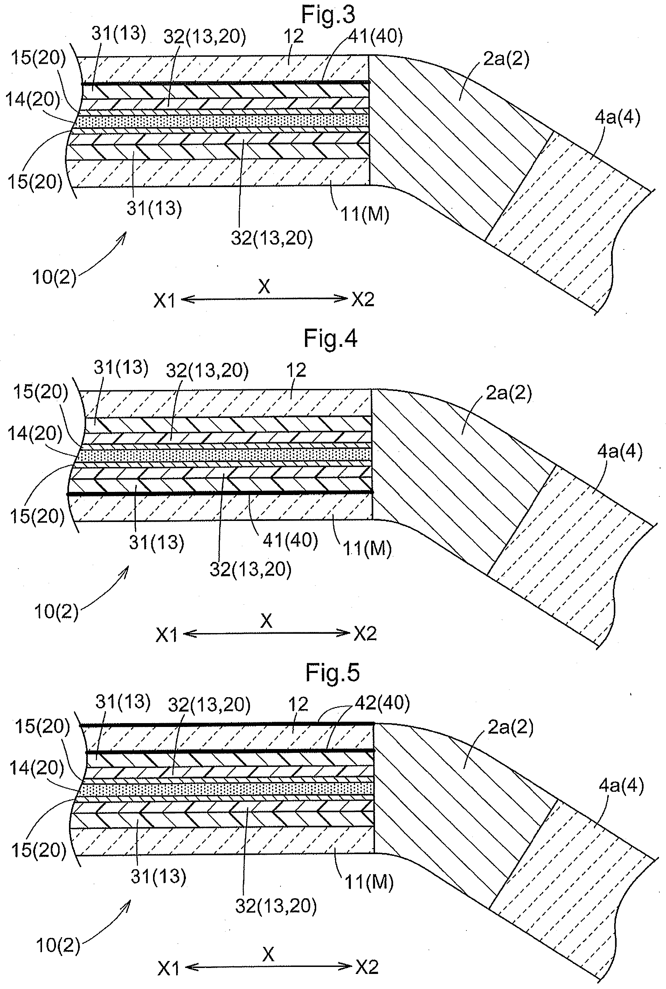

Since the laminated glass 10 having the dimming layer 14 has the pair of glass sheets 11 and 12, the laminated glass 10 is susceptible to the effects of external light on the vehicle interior space, reflections of the internal space caused by the pair of glass sheets 11 and 12, and the like. To address this, the laminated glass 10 in the second embodiment further includes an optical adjustment layer 40 that adjusts optical performance, as shown in FIG. 3. The other configurations are the same as those of the first embodiment.

Due to thus including the optical adjustment layer 40 that adjusts optical performance, the laminated glass 10 can appropriately adjust the effects that the pair of glass sheets 11 and 12 exerts on the vehicle interior space with use of the optical adjustment layer 40. Here, the optical adjustment layer 40 is capable of adjusting at least one of visible light transmittance, luminance, and luminous intensity. This enables the laminated glass 10 to appropriately adjust the effects of external light passing through the pair of glass sheets 11 and 12 on the vehicle interior space, by utilizing the optical adjustment layer 40.

Furthermore, the optical adjustment layer 40 in the present embodiment is disposed on the vehicle exterior side of the hue-matching layer M and includes a Low-E film 41. The Low-E film 41 is disposed between the second glass sheet 12 and one of the intermediate layers 13. Here, the Low-E film 41 is made of a metal film. To ensure both infrared reflectance and visible light transmittance, the thickness of the Low-E film 41 (low-emissivity film) is preferably about 1 to 5000 nm, and more preferably about 10 to 3000 nm. The Low-E film 41 preferably has a multilayer structure formed by laminating two or more types of layers selected from a metal layer, a metal oxide layer, a metal nitride layer, and a metal oxynitride layer. Suitable examples of the metal layer include a silver layer. Suitable examples of the metal oxide layer include a tin oxide layer, a titanium oxide layer, or a zinc oxide layer. Suitable examples of the metal nitride layer include silicon nitride. Suitable examples of the metal oxynitride layer include silicon oxynitride. According to this configuration, the optical adjustment layer 40 can function prior to the hue-matching layer M with respect to external light, and the hue-matching layer M can more readily exhibit its function with respect to the vehicle interior space than the optical adjustment layer 40. Therefore, the laminated glass 10 can easily achieve a sense of uniformity in hue in the vehicle interior space with use of the hue-matching layer M and the optical adjustment layer 40. In addition, since the Low-E film 41 is disposed between the second glass sheet 12 and the intermediate layer 13, the laminated glass 10 can exhibit a heat-shielding effect with use of the Low-E film 41.

[Modification 1 of the Second Embodiment]

As shown in FIG. 4, the Low-E film 41 in the laminated glass 10 may be disposed between the first glass sheet 11 and one of the intermediate layers 13. According to this configuration, the Low-E film 41 as the optical adjustment layer 40 can exhibit a heat-insulating effect in the laminated glass 10.

[Modification 2 of the Second Embodiment]

As shown in FIG. 5, the laminated glass 10 may include an anti-reflection layer 42 as the optical adjustment layer 40 that adjusts optical performance. Here, the anti-reflection layer 42 is a thin film having a film thickness of 60 nm to 120 nm and is made of silicon dioxide, titanium oxide, or the like. The anti-reflection layer 42 has, for example, one or more layers made of one or more types of materials. The material forming the anti-reflection layer 42 is not limited to a specific material. The anti-reflection layer 42 may be a film formed by a sol-gel method using $SiO_2$, $SiO_{1.5}$, $TiO_2$, or $TiO_{1.5}$ as a main component, and may also be a film in which hollow fine particles or fine particles of a low-refractive-index material are dispersed within the main component. The film thickness of the anti-reflection layer 42 in this form is, for example, 80 nm to 800 nm, preferably 100 nm to 500 nm, and more preferably greater than 100 nm and 150 nm or less.
In the example shown in FIG. 5, the anti-reflection layer 42 is disposed on both sides of the second glass sheet 12. If the optical adjustment layer 40 includes the anti-reflection layer 42 as in the present embodiment, reflections of the vehicle interior space on the laminated glass 10 can be easily avoided. Although not shown in the figure, the anti-reflection layer 42 may be provided only on the vehicle interior side of the second glass sheet 12.

[Modification 3 of the Second Embodiment]

In the laminated glass 10, the optical adjustment layer 40 may be constituted by at least one of the dimming layer 14, the second intermediate layers 32, the first intermediate layers 31, and the second glass sheet 12, as shown in FIG. 2.
If the optical adjustment layer 40 is constituted by existing members of the laminated glass 10 as in this modification, the laminated glass 10 can be configured without adding a new member as the optical adjustment layer 40, and the costs, processes, and the like during production can be reduced.

[Example]

In the following, the chromaticity based on the CIE L*a*b* chromaticity coordinates was measured for a glass A, a glass B, glasses C1 and C2, a glass D, and a glass E shown in Table 1 below, after converting the thickness of each glass to an equivalent thickness of 2 mm. The glass A has a grayish color. The glass B has a light greenish color. The glasses C1 and C2 have a transparent color. The glass D has a dark greenish color. The glass E has a dark yellowish color. Here, the glass A is an example of a privacy glass disposed on a lateral side or rear side of a rear seat of a vehicle.

[Table 1]

| Sample category | Glass A | Glass B | Glass C1 | Glass C2 | Glass D | Glass E |
|---|---|---|---|---|---|---|
| Thickness (mm) | 3.5 | 3.1 | 3.4 | 3.1 | 4.8 | 2.5 |
| Total amount of $Fe_2O_3$ (wt%) | 2.1 | 2.9 | 0.6 | 1.0 | 0.1 | 1.6 |
| $Co_3O_4$ (ppm) | 300 | 300 | 0 | 0 | 0 | 350 |
| Se (ppm) | 23 | 0 | 0 | 0 | 0 | 30 |
| $TiO_2$ (wt%) | 0 | 1.6 | 0.5 | 0.1 | 0 | 2.7 |
| a* (converted to 2 mm) | -3.2 | -13.9 | -5.2 | -5.1 | -0.5 | -5.4 |
| Difference from a* of glass A | - | 10.7 | 2.0 | 1.9 | 2.7 | 2.2 |
| b* (converted to 2 mm) | 0.9 | 8.7 | 3.1 | 2.7 | 0.1 | 10.8 |
| Difference from b* of glass A | - | 7.8 | 2.2 | 1.8 | 0.8 | 9.9 |
| Fa | -2.8 | -12.6 | -2.9 | -3.7 | -0.4 | -3.7 |

(continued)

| Sample category | Glass A | Glass B | Glass C1 | Glass C2 | Glass D | Glass E |
|---|---|---|---|---|---|---|
| Fb | 0.8 | 8.0 | 2.6 | 1.4 | 0.1 | 10.9 |

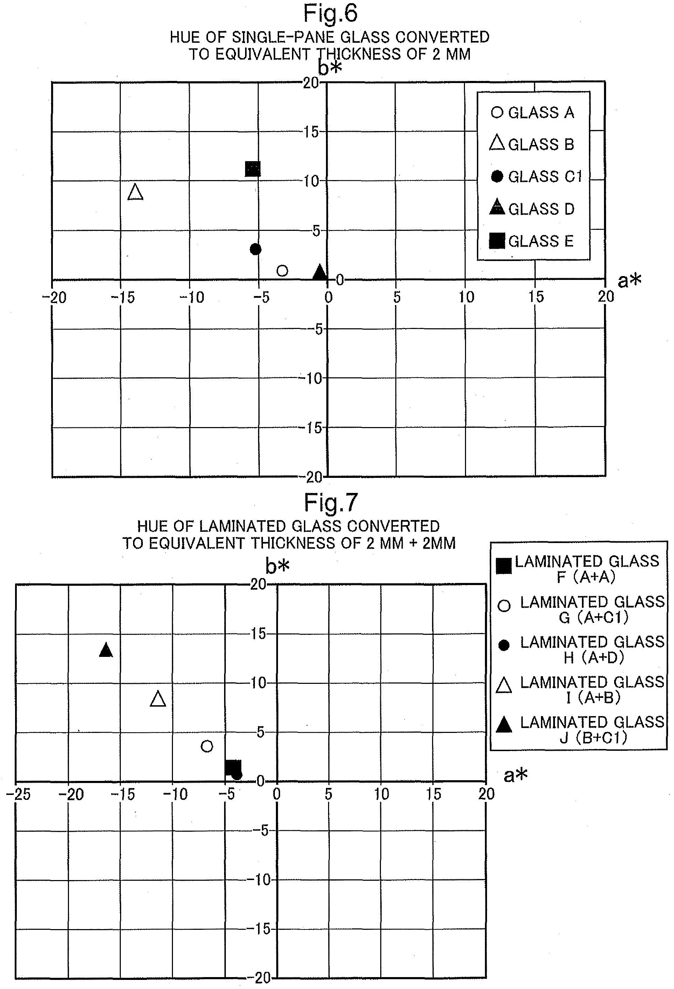

Table 1 and FIG. 6 show metal components contained in the glasses A to E and the results of measuring the chromaticity based on the CIE L*a*b* chromaticity coordinates. Here, the total amount of $Fe_2O_3$ refers to the total amount of iron oxide when it is assumed that all of FeO and $Fe_2O_3$ exist as $Fe_2O_3$, considering that both FeO and $Fe_2O_3$ exist as iron oxide in soda glass. According to Table 1 and FIG. 6, the differences in hue between the glass A and the glasses C1, C2, and the glass D were within 5 for a* and also within 5 for b*. In contrast, the differences in hue between the glass A and the glass B were 5 or more for both a* and b*. Also, the difference in hue between the glass A and the glass E was within 5 for a* but 5 or greater for b*. These results indicate that, in the case where the glass A is adopted as another glass provided in a face section continuous with the roof 2 in the vehicle 1 (FIG. 1), the glass A, the glasses C1 and C2, and the glass D are suitable for the hue-matching layer M (the first glass sheet 11).

Further, the glass A, the glasses C1 and C2, and the glass D each had an a* value in the range from -10.0 to 6.5 and a b* value in the range from -3.5 to 6.5. In contrast, the glass B had an a* value smaller than -10.0, which was outside the range from -10.0 to 6.5, and a b* value greater than 6.5, which was outside the range from -3.5 to 6.5. Also, the glass E had an a* value in the range from -10.0 to 6.5, but its b* value was greater than 6.5, which was outside the range from -3.5 to 6.5. These results also indicate that the glass A, the glasses C1 and C2, and the glass D are suitable for the hue-matching layer M in a single-pane glass (the first glass sheet 11).

Since the glass A is a privacy glass, it is preferable that the hue-matching layer M is formed of a glass containing 100 ppm or less of $Co_3O_4$ and 5 ppm or less of Se, such as the glasses C1 and C2 and the glass D, among the glasses other than the glass A.

[Laminated Glass]

Next, for the glasses A to E shown in Table 1 above, chromaticity based on the CIE L*a*b* chromaticity coordinates was measured after converting the thickness of each glass to an equivalent thickness of 2 mm, for the case of using two glasses as the pair of glass sheets 11 and 12 as a laminated glass. Five types of laminated glasses F-J shown in Table 2 below were used as the laminated glass. Regarding the intermediate layer, a PVB film 7018 (manufactured by Sekisui Chemical Co., Ltd.) was adopted as a common intermediate layer for all of the laminated glasses F to J. However, instead of this, an intermediate layer having a color may be used.

[Table 2]

| Sample category | Laminated glass F | Laminated glass G | Laminated glass H | Laminated glass I | Laminated glass J |
|---|---|---|---|---|---|
| Second glass sheet (vehicle exterior side) | Glass A | Glass A | Glass A | Glass A | Glass B |
| First glass sheet (vehicle interior side) | Glass A | Glass C1 | Glass D | Glass B | Glass C1 |
| a* (converted to 2 mm) | -4.6 | -6.7 | -3.9 | -11.4 | -16.4 |
| Difference from a* of glass A | 1.4 | 3.5 | 0.7 | 8.2 | 13.2 |
| b* (converted to 2 mm) | 1.4 | 3.6 | 0.7 | 8.2 | 13.2 |
| Difference from b* of glass A | 0.5 | 2.7 | 0.2 | 7.3 | 12.3 |

Table 2 and FIG. 7 show the results of measuring the chromaticity based on the CIE L*a*b* chromaticity coordinates for the laminated glasses F to J. The differences in hue between the glass A and the laminated glasses F to J based on Tables 1 and 2 are as follows. The differences in hue between the glass A and the laminated glasses F, G, and the laminated glass H were within 5 for a* and also within 5 for b*. In contrast, the differences in hue between the glass A and the laminated glasses I and the laminated glass J were 5 or greater for both a* and b*. These results indicate that, in the case where the glass A is adopted as another glass sheet provided in a face section continuous with the roof 2 in the vehicle 1 (FIG. 1), the laminated glass F, the laminated glass G, and the laminated glass H are suitable for the hue-matching layer M (the pair of glass sheets 11 and 12).

The laminated glass F, the laminated glass G, and the laminated glass H each had an a* value in the range from -10.0 to 6.5 and a b* value in the range from -3.5 to 6.5. In contrast, the laminated glass I and the laminated glass J each had an a* value smaller than -10.0, which was outside the range from -10.0 to 6.5, and a b* value greater than 6.5, which was outside the range from -3.5 to 6.5. These results also indicate that, in the laminated glass (the pair of glass sheets 11 and 12), the laminated glass F, the laminated glass G, and the laminated glass H are suitable for the hue-matching layer M.

The hue-matching layer M may be constituted by soda-lime glass specified by the following coloring component functions Fa and Fb in place of chromaticity values a* and b* based on the CIE L*a*b* chromaticity coordinates.

Assuming that Fa is a coloring component function correlated with a* in the chromaticity represented in the CIE L*a*b* chromaticity coordinates, Fa is defined, based on the total amount of $Fe_2O_3$, the amount of $TiO_2$, and the amount of Se contained in the glasses A to E, as:

$$Fa = -3.5 \times [Fe_2O_3\ (wt\%)] - 1.5 \times [TiO_2\ (wt\%)] + 0.20 \times [Se\ (ppm)]$$

Also, assuming that Fb is a coloring component function correlated with b* in the chromaticity represented in the CIE L*a*b* chromaticity coordinates, Fb is defined, based on the total amount of $Fe_2O_3$, the amount of $TiO_2$, the amount of $Co_3O_4$, and the amount of Se contained in the glasses A to E, as:

Fb = $[Fe_2O_3(wt\%)]$ + 4 $\times$ $[TiO_2(wt\%)]$ - 43 $\times$ $10^{-4}$ $\times$ $[Co_3O_4(ppm)]$ + 0.4 $\times$ $10^{-4}$ $\times$ [Se (ppm)]

It is preferable that the hue-matching layer M be configured from soda-lime glass satisfying $-9 \leq Fa \leq 1$ and $-5 \leq Fb \leq 10$ when the coloring component functions Fa and Fb are defined as above.

In the above example, for the glass C1, the coloring component functions Fa and Fb are as follows:

$$Fa = -3.5 \times (0.6) - 1.5 \times (0.5) + 0.20 \times (0) = -2.9$$

$$Fb = (0.6) + 4 \times (0.5) - 43 \times 10^{-4}(0) + 0.4 \times 10^{-4} \times [0] = 2.6$$

For the glass D, the coloring component functions Fa and Fb are as follows:

$$Fa = -3.5 \times (0.1) - 1.5 \times (0) + 0.20 \times (0) = -0.4$$

$$Fb = (0.1) + 4 \times (0) - 43 \times 10^{-4} \times (0) + 0.4 \times 10^{-4} \times (0) = 0.1$$

Therefore, the glass C1 and the glass D satisfy $-9 \leq Fa \leq 1$ and $-5 \leq Fb \leq 10$. Similarly, glass C2 also satisfies these inequalities.

In contrast, for the glass B in the above example, the coloring component functions Fa and Fb are as follows:

$$Fa = -3.5 \times (2.9) - 1.5 \times (1.6) + 0.20 \times (0) = -12.6$$

$$Fb = (2.9) + 4 \times (1.6) - 43 \times 10^{-4} \times (300) + 0.4 \times 10^{-4} \times (0) = 8.0.$$

For the glass E, the coloring component functions Fa and Fb are as follows:

$$Fa = -3.5 \times (1.6) - 1.5 \times (2.7) + 0.20 \times (30) = -3.7$$

$$Fb = (1.6) + 4 \times (2.7) - 43 \times 10^{-4} \times (350) + 0.4 \times 10^{-4} \times (30) = 10.9$$

Therefore, the glass B and the glass E do not satisfy $-9 \leq Fa \leq 1$ and $-5 \leq Fb \leq 10$.

In the chromaticity represented in the CIE L*a*b* chromaticity coordinates, an increase in a* of the chromaticity toward the positive side results in more reddish appearance, and an increase toward the negative side results in more greenish appearance. An increase in b* of the chromaticity toward the positive side results in more yellowish appearance, and an increase toward the negative side results in more bluish appearance. In the case where the hue-matching layer M is made of soda glass and contains a large amount of $Fe_2O_3$ or $TiO_2$, a* increases toward the negative side, resulting in a more greenish appearance, and b* increases toward the positive side, resulting in more yellowish appearance. Therefore, the coloring component functions Fa and Fb, which correlate with a* and b*, respectively, in the chromaticity represented in the CIE L*a*b* chromaticity coordinates are proportional to a* and b* by defining the coefficients of the respective components as described above. Accordingly, if the hue-matching layer M is made of soda glass, and Fa and Fb satisfy the above-described ranges, a* and b* can be kept within predetermined ranges in the chromaticity represented in the CIE L*a*b* chromaticity coordinates. As a result, the laminated glass 10 can effectively achieve a sense of uniformity with the privacy glass within the vehicle space through the hue-matching layer M.

[Other Embodiments]

(1) In the above second embodiment, an example was described in which the Low-E film 41 is used as the optical adjustment layer 40, and in the above third embodiment, an example was described in which the anti-reflection layer 42 is used as the optical adjustment layer 40. However, the optical adjustment layer 40 may be configured using both the Low-E film 41 and the anti-reflection layer 42.

(2) In the laminated glass 10, the hue-matching layer M (the first glass sheet 11 or the pair of glass sheets 11 and 12) may be made of soda-lime glass containing 1.2 wt% or less of $Fe_2O_3$ and 0.5 wt% or less of $TiO_2$.

In the case where the hue-matching layer M is made of soda glass and contains a large amount of $Fe_2O_3$ or $TiO_2$, a* increases toward the negative side, resulting in more greenish appearance, and b* increases toward the positive side, resulting in more yellowish appearance in the chromaticity represented in the CIE L*a*b* chromaticity coordinates. In contrast, if the hue-matching layer M is made of soda-lime glass containing 1.2 wt% or less of $Fe_2O_3$ and 0.5 wt% or less of $TiO_2$, as in the present embodiments, a* and b* become smaller, and the hue of the hue-matching layer M is suppressed. As a result, the laminated glass 10 can effectively achieve a sense of uniformity with the privacy glass within the vehicle space through the hue-matching layer M.

(3) In the case of the soda glass described in item (2), the hue-matching layer M may further contain 100 ppm or less of $Co_3O_4$ and 5 ppm or less of Se. In the case where the hue-matching layer M is made of soda-lime glass and contains a large amount of $Co_3O_4$, b* increases toward the negative side, resulting in a more greenish appearance in the chromaticity represented in the CIE L*a*b* chromaticity coordinates. Further, in the case where the hue-matching layer M is made of soda glass and contains a large amount of Se, a* increases toward the positive side, resulting in more reddish appearance, and b* increases toward the positive side, resulting in more yellowish appearance in the chromaticity represented in the CIE L*a*b* chromaticity coordinates. In contrast, if the hue-matching layer M contains 100 ppm or less of $Co_3O_4$ and 5 ppm or less of Se as in this configuration, changes in hue of the hue-matching layer M caused by a* and b* are suppressed. As a result, the laminated glass 10 can effectively achieve a sense of uniformity with the privacy glass within the vehicle space through the hue-matching layer M.

(4) The laminated glass 10 may be configured such that the hue-matching layer M (the first glass sheet 11 or the pair of glass sheets 11 and 12) is made of soda-lime glass in which a combined amount of the total amount of $Fe_2O_3$ and the amount of $TiO_2$ is 1.0 wt% or more and 4.0 wt% or less, the content of $Co_3O_4$ is 500 ppm or less, and the content of Se is 15 ppm or more and 40 ppm or less.

Even in the case where the combined amount of the total amount of $Fe_2O_3$ and the amount of $TiO_2$ in the hue-matching layer M is 1.0 wt% or more and 4.0 wt% or less as in the present embodiment, if the hue-matching layer M is made of soda-lime glass containing 500 ppm or less of $Co_3O_4$ and 15 ppm or more and 40 ppm or less of Se, the tendency of a* to increase in the negative direction due to the combined amount of the total amount of $Fe_2O_3$ and the amount of $TiO_2$ is offset toward the positive direction by the presence of Se. Also, the tendency of b* to increase in the positive direction due to the combined amount of the total amount of $Fe_2O_3$ and the amount of $TiO_2$ in the hue-matching layer M is offset toward the negative direction by the presence of $Co_3O_4$. That is to say, neither a* nor b* takes an excessively large value in the positive or negative direction, thereby enabling the laminated glass 10 to effectively achieve a sense of uniformity with the privacy glass in the vehicle space with use of the hue-matching layer M. Furthermore, the laminated glass 10 may adopt the glass A (privacy glass) shown in Table 1 as the hue-matching layer M.

Industrial Applicability

The present invention is widely applicable to a vehicle roof laminated glass.

Description of Reference Signs

1: Vehicle

2:      Roof
4a:     Rear glass (another glass sheet)
10:     Laminated glass (vehicle roof laminated glass)
11:     First glass sheet (inner glass sheet)
12:     Second glass sheet (outer glass sheet)
13:     Intermediate layer
14:     Dimming layer
15:     Conductive layer
20:     Dimming section
31:     First intermediate layer (adhesive layer)
32:     Second intermediate layer (support substrate)
40:     Optical adjustment layer
41:     Low-E film
42:     Anti-reflection layer
M:     Hue-matching layer

## Claims

1. A vehicle roof laminated glass for use in at least a part of a roof of a vehicle, comprising:

   a dimming layer capable of adjusting light transmittance in response to application of a voltage;
   an insulating intermediate layer disposed to hold the dimming layer; and
   an outer glass sheet and an inner glass sheet that are a pair of glass sheets disposed to hold the intermediate layer,
   wherein the vehicle roof laminated glass has a hue-matching layer disposed on a vehicle interior side of the dimming layer and configured to match hue with another glass sheet provided in a face section of the vehicle continuous with the roof.

2. The vehicle roof laminated glass according to claim 1,
   wherein the hue-matching layer is constituted by the inner glass sheet.

3. The vehicle roof laminated glass according to claim 1 or 2, further comprising an optical adjustment layer configured to adjust optical performance.

4. The vehicle roof laminated glass according to claim 3,
   wherein the optical adjustment layer is capable of adjusting at least one of: visible light transmittance; luminance; and luminous intensity.

5. The vehicle roof laminated glass according to claim 3 or 4,
   wherein the optical adjustment layer is disposed on a vehicle exterior side of the hue-matching layer.

6. The vehicle roof laminated glass according to any one of claims 3 to 5,

   wherein the intermediate layer includes: a support substrate disposed on each of two sides of the dimming layer to support the dimming layer; and an adhesive layer disposed between the support substrate and a corresponding one of the pair of glass sheets to bond the support substrate to the corresponding one of the pair of glass sheets, and
   the optical adjustment layer is constituted by at least one of the dimming layer, the support substrate, the adhesive layer, and the outer glass sheet.

7. The vehicle roof laminated glass according to any one of claims 3 to 6,
   wherein the optical adjustment layer includes at least one of a Low-E film and an anti-reflection layer.

8. The vehicle roof laminated glass according to any one of claims 1 to 7,
   wherein the pair of glass sheets each have an area of 800 mm $\times$ 600 mm or more.

9. The vehicle roof laminated glass according to any one of claims 1 to 8,
   wherein the hue-matching layer is constituted only by the inner glass sheet, and has a difference in hue from the other glass sheet within 5 for a* and within 5 for b* in a chromaticity represented in CIE L*a*b* chromaticity coordinates.

10. The vehicle roof laminated glass according to claim 9,
wherein the hue-matching layer has an a* value of -10.0 or more and 6.5 or less and a b* value of -3.5 or more and 6.5 or less in the chromaticity represented in the CIE L*a*b* chromaticity coordinates.

11. The vehicle roof laminated glass according to any one of claims 1 to 8,
wherein the hue-matching layer is constituted by the pair of glass sheets, and the hue-matching layer has a difference in hue from the other glass sheet within 5 for a* and within 5 for b* in a chromaticity represented in CIE L*a*b* chromaticity coordinates while the dimming layer is in a transmitting state in which the dimming layer transmits visible light.

12. The vehicle roof laminated glass according to claim 11,
wherein the hue-matching layer has an a* value of -10.0 or more and 6.5 or less, and a b* value of -3.5 or more and 6.5 or less in the chromaticity represented in the CIE L*a*b* chromaticity coordinates.

13. The vehicle roof laminated glass according to any one of claims 1 to 12,
wherein the hue-matching layer is made of soda-lime glass in which a total amount of $Fe_2O_3$ is 1.2 wt% or less, the soda-lime glass containing 0.5 wt% or less of $TiO_2$.

14. The vehicle roof laminated glass according to claim 13,
wherein the hue-matching layer is made of soda-lime glass further containing 100 ppm or less of $Co_3O_4$ and 5 ppm or less of Se.

15. The vehicle roof laminated glass according to any one of claims 1 to 12,
wherein the hue-matching layer is made of soda-lime glass in which a combined amount of a total amount of $Fe_2O_3$ and an amount of $TiO_2$ is 1.0 wt% or more and 4.0 wt% or less, the soda-lime glass containing 500 ppm or less of $Co_3O_4$ and 15 ppm or more and 40 ppm or less of Se.

16. The vehicle roof laminated glass according to any one of claims 1 to 15,

wherein the hue-matching layer is made of soda-lime glass satisfying $-9 \leq Fa \leq 1$ and $-5 \leq Fb \leq 10$,
where Fa is a coloring component function correlated with a* and Fb is a coloring component function correlated with b* in a chromaticity represented in CIE L*a*b* chromaticity coordinates, and the coloring component function Fa and the coloring component function Fb are defined, based on a total amount of $Fe_2O_3$, an amount of $TiO_2$, an amount of $Co_3O_4$, and an amount of Se that are contained in the hue-matching layer, as:

$Fa = -3.5 \times$ [total amount of $Fe_2O_3$ (wt%)] $- 1.5 \times$ [$TiO_2$ (wt%)] $+ 0.20 \times$ [Se (ppm)]; and

and

$Fb =$ [total amount of $Fe_2O_3$ (wt%)] $+ 4 \times$ [$TiO_2$ (wt%)] $- 43 \times 10^{-4} \times$ [$Co_3O_4$ (ppm)] $+ 0.4 \times 10^{-4} \times$ [Se(ppm)].

## Fig.1

## Fig.2

## Fig.3

15

## Fig.6
### HUE OF SINGLE-PANE GLASS CONVERTED TO EQUIVALENT THICKNESS OF 2 MM

○ GLASS A
△ GLASS B
● GLASS C1
▲ GLASS D
■ GLASS E

## Fig.7
### HUE OF LAMINATED GLASS CONVERTED TO EQUIVALENT THICKNESS OF 2 MM + 2MM

■ LAMINATED GLASS F (A+A)
○ LAMINATED GLASS G (A+C1)
● LAMINATED GLASS H (A+D)
△ LAMINATED GLASS I (A+B)
▲ LAMINATED GLASS J (B+C1)

## INTERNATIONAL SEARCH REPORT

| International application No. |
| --- |
| **PCT/JP2024/031113** |

| A. | CLASSIFICATION OF SUBJECT MATTER |
| --- | --- |

*B60J 1/00*(2006.01)i; *B60J 3/04*(2006.01)i; *C03C 27/12*(2006.01)i
FI:   B60J1/00 W; B60J1/00 H; B60J3/04; C03C27/12 N

According to International Patent Classification (IPC) or to both national classification and IPC

| B. | FIELDS SEARCHED |
| --- | --- |

Minimum documentation searched (classification system followed by classification symbols)

B60J1/00-1/20; B60J3/04; C03C1/00-29/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2022-508617 A (CENTRAL GLASS CO., LTD.) 19 January 2022 (2022-01-19) <br> paragraphs [0016]-[0036], fig. 1 | 1-16 |
| Y | WO 2022/131276 A1 (AGC INC.) 23 June 2022 (2022-06-23) <br> paragraphs [0115]-[0116], [0120]-[0124], [0130], [0191], fig. 1 | 1-14, 16 |
| Y | JP 6-247740 A (CENTRAL GLASS CO., LTD.) 06 September 1994 (1994-09-06) <br> paragraphs [0010]-[0022], [0030], [0037], [0040], fig. 1 | 1-13, 15-16 |
| Y | WO 2023/085254 A1 (AGC INC.) 19 May 2023 (2023-05-19) <br> paragraph [0002] | 3-16 |
| A | JP 2023-63044 A (TOPPAN PRINTING CO., LTD.) 09 May 2023 (2023-05-09) <br> entire text, all drawings | 1-16 |
| A | JP 4-365620 A (NIPPON SHEET GLASS COMPANY, LIMITED) 17 December 1992 (1992-12-17) <br> entire text, all drawings | 1-16 |

| ✓ Further documents are listed in the continuation of Box C. | ✓ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **09 October 2024** | **22 October 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
| --- |
| **PCT/JP2024/031113** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2001-226148 A (NIPPON SHEET GLASS COMPANY, LIMITED) 21 August 2001 (2001-08-21) <br> entire text, all drawings | 1-16 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2022-508617 | A | 19 January 2022 | US | 2021/0387513 | A1 | |
| | | | | paragraphs [0015]-[0043], fig. 1 | | | |
| | | | | EP | 3860843 | A1 | |
| | | | | CN | 112789164 | A | |
| | | | | WO | 2020/072709 | A1 | |
| WO | 2022/131276 | A1 | 23 June 2022 | (Family: none) | | | |
| JP | 6-247740 | A | 06 September 1994 | (Family: none) | | | |
| WO | 2023/085254 | A1 | 19 May 2023 | (Family: none) | | | |
| JP | 2023-63044 | A | 09 May 2023 | (Family: none) | | | |
| JP | 4-365620 | A | 17 December 1992 | US | 5336565 | A | |
| | | | | entire text, all drawings | | | |
| JP | 2001-226148 | A | 21 August 2001 | US | 2003/0198808 | A1 | |
| | | | | entire text, all drawings | | | |
| | | | | EP | 1108693 | A1 | |

Form PCT/ISA/210 (patent family annex) (July 2022)

**REFERENCES CITED IN THE DESCRIPTION**

**Patent documents cited in the description**

- WO 2022153998 A